# EUROPEAN PATENT APPLICATION

(11) **EP 4 160 722 A1**
(43) Date of publication of application: **05.04.2023**
(21) Application number: 21914620.6
(22) Date of filing: 30.12.2021
(51) Int. Cl.: H01M 4/13, H01M 50/531, H01M 10/0525

(54) **ELECTRODE SHEET AND LITHIUM-ION BATTERY**

(30) Priority: 30.12.2020 CN 202011631163
(71) Applicant: Zhuhai CosMX Battery Co., Ltd., Zhuhai, Guangdong 519180 (CN)
(72) Inventor: SUN, Leiming, Zhuhai, Guangdong 519180 (CN); ZHANG, Jian, Zhuhai, Guangdong 519180 (CN); ZHANG, Shuanghu, Zhuhai, Guangdong 519180 (CN); PENG, Chong, Zhuhai, Guangdong 519180 (CN)
(74) Representative: Bandpay & Greuter
(86) International application number: PCT/CN2021/143038
(87) International publication number: WO 2022/143889

(57) **Abstract**

The present invention provides an electrode sheet and a lithium-ion battery. A first aspect of the present invention provides an electrode sheet, including a current collector, and a first active layer and a second active layer which are sequentially stacked on a surface of the current collector; where, the first active layer is provided with a first groove, the second active layer is provided with a second groove, and a vertical projection of the second groove on the current collector covers a vertical projection of the first groove on the current collector; a tab is disposed at the first groove and is electrically connected with the current collector. The electrode sheet provided by the present invention effectively improves the charging risk at a tab connection position and increases the cycle retention rate of the lithium-ion battery under the condition of maintaining high-rate charging.

## Description

The present application claims priority to Chinese Patent Application No. 202011631163.1, entitled with "ELECTRODE SHEET AND LITHIUM-ION BATTERY", filed with China National Intellectual Property Administration on December 30, 2020, which is hereby incorporated by reference in its entirety.

### TECHNICAL FIELD

The present invention relates to an electrode sheet and a lithium-ion battery, and, to the technical field of lithium-ion batteries.

### BACKGROUND

With the continuous development of 5G era, the status of lithium-ion batteries is becoming more and more important, which also promotes the unceasing development of lithium-ion batteries towards the direction of high power density and high-rate charging. At present, the impedance of the lithium-ion battery may be reduced by adjusting the connection position of the tab on the electrode sheet from the edge to the center part of the side, thereby increasing the charging speed of the lithium-ion battery.

However, when the position of the tab changes, the current density around the tab will increase, and along with the cycling of the lithium-ion battery, lithium ions will be precipitated, resulting in the deterioration of the cycle performance of the lithium-ion battery. Therefore, how to improve the cycle performance of lithium-ion batteries while maintaining high-rate charging has attracted more and more attention.

### SUMMARY

The present invention provides an electrode sheet for improving the cycle performance of a lithium-ion battery under the condition of high-rate charging.

A first aspect of the present invention provides an electrode sheet, including a current collector, and a first active layer and a second active layer which are sequentially stacked on a surface of the current collector;
where, the first active layer is provided with a first groove, the second active layer is provided with a second groove, and a vertical projection of the second groove on the current collector covers a vertical projection of the first groove on the current collector;
a tab is disposed at the first groove and is electrically connected with the current collector.

Further, a length of the second groove is greater than a length of the first groove.

Further, a width of the second groove is the same as a width of the current collector.

Further, a difference between the length of the second groove and the length of the first groove is less than or equal to 500mm.

Further, the electrode sheet is a negative electrode sheet, and an average particle size of a negative active material in the second active layer is 10-18µm, and a graphitization degree of the negative active material in the second active layer is 86-94%.

Further, an average particle size and a graphitization degree of a negative active material in the first active layer are greater than the average particle size and the graphitization degree of the negative active material in the second active layer, respectively.

Incoming591-2023.01.02-PCTEntry-APP-TranslationFurther, an area of the vertical projection of the first groove on the current collector is greater than an area of a tab connection region of the current collector.

Further, a width of the first groove is 1-2 times a width of the tab connection region.

Further, the length of the first groove is 1-2 times a length of the tab connection region.

A second aspect of the present invention provides a lithium-ion battery including any of the above electrode sheets.

The implementation of the present invention has at least the following advantages.
1. The present invention provides an electrode sheet, which effectively improves the charging risk at the connection position of a tab by reducing the thickness of the active layer around the tab, thereby improving the cycle retention rate of the lithium-ion battery under the condition of maintaining high-rate charging.
2. The lithium-ion battery provided by the present invention has better cycle performance under the condition of high-rate charging.

### BRIEF DESCRIPTION OF DRAWINGS

To describe the technical solutions in embodiments of the present invention or in the prior art more clearly, the following briefly explains the accompanying drawings required for describing the embodiments or the prior art. Apparently, the accompanying drawings in the following description are merely some embodiments of the present invention, and persons of ordinary skill in the art may still derive other drawings from these accompanying drawings without creative effort.
FIG. 1a is a front view of an electrode sheet according to an embodiment of the present invention.
FIG. 1b is a top view of an electrode sheet according to an embodiment of the present invention.
FIG. 1c is a left view of an electrode sheet according to an embodiment of the present invention.
FIG. 2a is a front view of an electrode sheet according to another embodiment of the present invention.
FIG. 2b is a top view of an electrode sheet according to another embodiment of the present invention.
FIG. 3 is a top view of an electrode sheet according to yet another embodiment of the present invention.

Description of reference numerals:
1: current collector;
2: first active layer;
3: second active layer;
4: tab.

### DESCRIPTION OF EMBODIMENTS

To make the objectives, technical solutions, and advantages of the present invention clearer, the technical solutions in embodiments of the present invention will be described clearly and comprehensively below with reference to the embodiments of the present invention. Apparently, the described embodiments are merely a part rather than all embodiments of the present invention. All other embodiments obtained by persons of ordinary skill in the art based on embodiments of the present invention without creative effort shall fall within the protection scope of the present invention.

A first aspect of the present invention provides an electrode sheet, including a current collector, and a first active layer and a second active layer which are sequentially stacked on the surface of the current collector;
where, the first active layer is provided with a first groove, the second active layer is provided with a second groove, and the vertical projection of the second groove on the current collector covers the vertical projection of the first groove on the current collector;
a tab is disposed at the first groove and is electrically connected with the current collector.

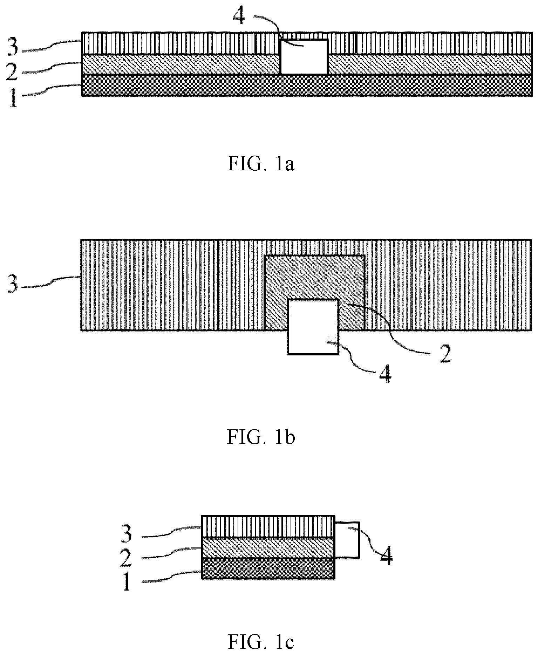

According to the design of existing electrode sheets, side faces of the first active layer and the second active layer are respectively provided with grooves, each groove communicating with an upper surface of the second active layer and an upper surface of the current collector, so that the tab may be disposed at the groove and is electrically connected with the current collector exposed at the groove. The electrode sheet provided in the present invention improves the charging risk of the tab connection position mainly due to reduced thickness of the active layer around the tab. Specifically, FIG. 1a is a front view of an electrode sheet according to an embodiment of the present invention; FIG. 1b is a top view of an electrode sheet according to an embodiment of the present invention; FIG. 1c is a left view of an electrode sheet according to an embodiment of the present invention. As shown in FIGS. 1a-1c, the electrode sheet includes a current collector 1, a first active layer 2 disposed on the upper surface of the current collector 1, and a second active layer 3 disposed on the side face of the first active layer 2 far away from an upper surface of the current collector 1. A first groove is disposed in the middle of the side face of the first active layer 2, and the second groove is disposed in the second active layer 3. The tab 4 is disposed at the first groove and is electrically connected with the current collector 1 (a vertical projection of the tab on the current collector 1 is overlapped with a vertical projection of the first groove on the current collector), and a vertical projection of the second groove on the current collector covers a vertical projection of the first groove on the current collector, so that the thickness of the active layer in a region around the tab is lower than that in a region far away from the tab. Where, the length definition of the electrode sheet of the present application is the same as that of an electrode sheet in the art, that is, the longest side of electrode sheet means the length of the electrode sheet, the shortest side of the electrode sheet means a height of the electrode sheet, and a side between the longest side and the shortest side means a width of the electrode sheet. That is, in FIG. 1a, a longer side of the electrode sheet means the length of the electrode sheet and a shorter side of the electrode sheet means the height of the electrode sheet; and in FIG. 1b, a shorter side of the electrode sheet means the width of the electrode sheet, therefore, a value of a long side of the electrode sheet is the length of the electrode sheet, a value of a high side of the electrode sheet is the thickness of the electrode sheet, and a value of a wide side of the electrode sheet is the width of the electrode sheet. And, the first groove and the second groove have the same directions of length, width and thickness with the electrode sheet. The present invention provides an electrode sheet, which effectively improves the charging risk at the connection position of tab by reducing the thickness of the active layer around the tab, thereby improving the cycle retention rate of the lithium-ion battery under the condition of maintaining high-rate charging.

In the electrode sheet structures shown in FIGS. 1a-1c, since the second active layer is provided with the second groove, in the actual preparation process, the position of the second groove needs to be subjected to blank coating. But the existing coating equipment and coating process cannot directly realize such a coating pattern, therefore, in order to improve the preparation efficiency of the second active layer, the width of the second groove may be enlarged to make it the same as the width of the current collector, so that the second active layer provided with the second groove can be obtained by skip-coating using the existing coating equipment.

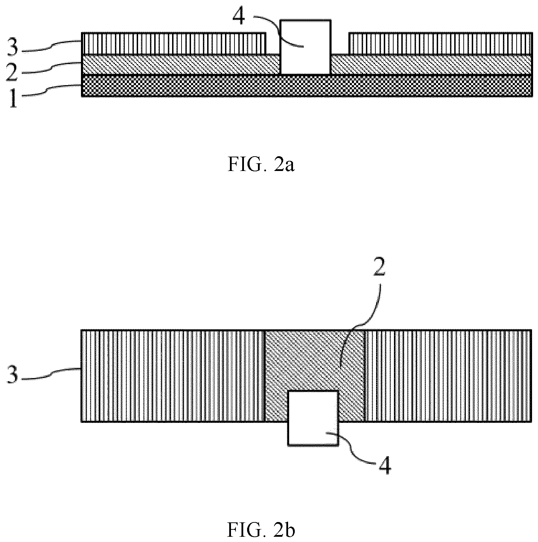

FIG. 2a is a front view of an electrode sheet according to another embodiment of the present invention; FIG. 2b is a top view of an electrode sheet according to another embodiment of the present invention. As shown in FIGS. 2a-2b, the electrode sheet includes a current collector 1, and a first active layer 2 and a second active layer 3 which are sequentially disposed on the surface of the current collector 1. A first groove is disposed in the middle of a side surface of the first active layer 1, and the first groove is connected to a tab 4 in a corresponding region of the current collector 1. The second active layer 2 is provided with a second groove, and the width of the second groove is the same as the width of the current collector 1. That is, the second active layer is divided into two independent parts, i.e., a left part and a right part, by the second groove.

In order to further improve the cycle performance of the lithium-ion battery, a length of the second groove is greater than that of the first groove. And, it is found from the research on the lengths of the first groove and the second groove that the cycle performance of the lithium-ion battery is gradually improved with the continuous increase of the length of the second groove. In order to give consideration to both the energy density and cycle performance of the lithium ion battery, the difference between the length of the second groove and the length of the first groove is less than or equal to 500mm.

The length and width of the first groove are specifically determined according to the tab, and those skilled in the art can determine the length and width of the first groove according to the actual design and needs of the electrode sheet.

In order to enable the lithium-ion battery to have fast-charging performance, when the electrode sheet is a negative electrode sheet, an average particle size of a negative active material in the second active layer is 10-18µm, and a graphitization degree of the negative active material in the second active layer is 86-94%.

In addition, due to the limited compaction density of the fast-charging graphite, the energy density of the lithium-ion battery is reduced. In order to give consideration to both the energy density and the fast-charging performance of the lithium-ion battery, the negative active material in the first active layer is selected from conventional graphite. Specifically, the average particle size and the graphitization degree of the negative active material in the first active layer are greater than the average particle size and the graphitization degree of the negative active material in the second active layer, respectively. For example, when the average particle size of the negative active material in the second active layer is 10-18µm and the graphitization degree of the negative active material in the second active layer is 86-94%, the average particle size of the negative active material in the first active layer is 12-30µm and the graphitization degree of the negative active material in the first active layer is 90-98%.

According to the structure of the above electrode sheet, in the preparation process of the negative electrode sheet, a first negative active layer slurry may be prepared by combing the negative active material with a binder, a conductive agent and a thickening agent, and the prepared slurry is coated on the surface of the current collector to obtain the first active layer; and then, a second negative active layer slurry is prepared and the prepared second negative active layer slurry is coated on a surface of the first active layer far away from the current collector, and during the coating process, a region corresponding to the second groove needs to be subjected to blank coating, thereby obtaining the second active layer including the second groove; and finally, the middle region of a side surface of the first active layer is cleaned to obtain a first groove, and a tab is disposed in the first groove to obtain the negative electrode sheet. The negative active material may include at least one of artificial graphite, natural graphite and modified graphite; the binder may include at least one of polyvinylidene fluoride (PVDF), a copolymer of vinylidene fluoride-hexafluoropropylene, polyamide, polyacrylonitrile, polyacrylate, polyacrylic acid, polyacrylate, polyvinyl pyrrolidone, polyvinyl ether, polymethyl methacrylate, polytetrafluoroethylene, polyhexafluoropropylene, and styrene-butadiene rubber (SBR); the conductive agent may include at least one of conductive carbon black, carbon nanotube, conductive graphite, and graphene; and the thickening agent may include sodium carboxymethyl cellulose.

The electrode sheet provided by the present invention is also applicable to a positive electrode sheet, and the specific preparation method may refer to the preparation of negative electrode sheet except for different materials. Specifically, the current collector may be an aluminum foil, and a positive active material for the positive electrode sheet includes at least one of lithium cobalt oxide, lithium manganese oxide, lithium nickel oxide, lithium nickel cobalt manganese oxide, lithium iron phosphate, lithium manganese iron phosphate, lithium vanadium phosphate, lithium oxyvanadium phosphate, lithium-rich manganese-based material and lithium nickel cobalt aluminate.

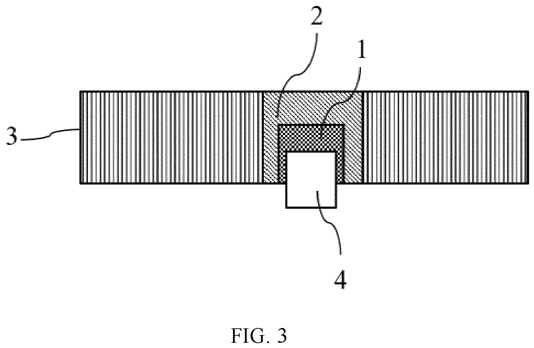

In the actual preparation process, in order to facilitate the connection between the tab and the current collector, an area of the vertical projection of the first groove on the current collector may be greater than that of a tab connection region in the current collector. FIG. 3 is a top view of an electrode sheet according to yet another embodiment of the present invention. As shown in FIG. 3, the area of the vertical projection of the first groove on the current collector is greater than that of the tab connection region in the current collector.

Further, the width of the first groove is 1-2 times the width of the tab connection region.

Further, the length of the first groove is 1-2 times the length of the tab connection region.

To sum up, the present invention provides an electrode sheet, which effectively improves the charging risk at the tab connection position by reducing the thickness of the active layer around the tab, thereby improving the cycle retention rate of the lithium-ion battery under the condition of maintaining high-rate charging.

A second aspect of the present invention provides a lithium-ion battery including any of the above electrode sheets.

The present invention provides a lithium-ion battery, which is prepared by combining the prior art on the basis of the electrode sheet provided by the present invention. The lithium-ion battery provided by the present invention has better cycle performance under the condition of high-rate charging.

The following will be illustrated in combination with specific examples.

### Example 1

The front view, top view, and left view of the electrode sheet provided by this Example are as shown in FIG. 2a, FIG. 3, and FIG. 1c, respectively, where:
the current collector was copper foil with a width of 81mm;
the first groove had a width of 25mm and a length of 10mm;
the second groove had a width of 81mm and a length of 30mm.

When the electrode sheet was a positive electrode sheet, the first active layer and the second active layer each included 97 parts by mass of lithium cobalt oxide, 1.5 parts by mass of PVDF and 1.5 parts by mass of carbon black conductive agent 1.5%.

When the electrode sheet was a negative electrode sheet, both the first active layer and the second active layer included 97 parts by mass of graphite, 0.7 parts by mass of carbon black, 1.3 parts by mass of styrene-butadiene rubber and 1 part by mass of sodium carboxymethyl cellulose. The average particle size of the negative active material in the first active layer was 18µm, and the graphitization degree of the negative active material in the first active layer was 96%; and the average particle size of the negative active material in the second active layer was 15µm, and the graphitization degree of the negative active material in the second active layer was 92%.

### Example 2

The front view, top view, and left view of the electrode sheet provided by this Example are as shown in FIG. 2a, FIG. 3, and FIG. 1c, respectively, where:
the current collector was copper foil with a width of 81mm;
the first groove had a width of 25mm and a length of 10mm;
the second groove had a width of 81mm and a length of 40mm.

When the electrode sheet was a positive electrode sheet or a negative electrode sheet, the materials of the first active layer and the second active layer were the same as those of Example 1.

### Example 3

The front view, top view, and left view of the electrode sheet provided by this Example are as shown in FIG. 2a, FIG. 3, and FIG. 1c, respectively, where:
the current collector was copper foil with a width of 81mm;
the first groove had a width of 25mm and a length of 10mm;
the second groove had a width of 81mm and a length of 50mm.

When the electrode sheet was a positive electrode sheet or a negative electrode sheet, the materials of the first active layer and the second active layer were the same as those of Example 1.

### Example 4

The front view, top view, and left view of the electrode sheet provided by this Example are as shown respectively in FIG. 2a, FIG. 3, and FIG. 1c, respectively, where:
the current collector was copper foil with a width of 81mm;
the first groove had a width of 25mm and a length of 10mm;
the second groove had a width of 81mm and a length of 60mm.

When the electrode sheet was a positive electrode sheet or a negative electrode sheet, the materials of the first active layer and the second active layer were the same as those of Example 1.

### Example 5

The front view, top view, and left view of the electrode sheet provided by this Example are as shown in FIG. 2a, FIG. 3, and FIG. 1c, respectively, where:
the current collector was copper foil with the width of 81mm;
the first groove had a width of 25mm and a length of 10mm;
the second groove had a width of 81mm and a length of 70mm.

When the electrode sheet was a positive electrode sheet or a negative electrode sheet, the materials of the first active layer and the second active layer were the same as those of Example 1.

### Example 6

The front view, top view, and left view of the electrode sheet provided by this Example are as shown in FIG. 2a, FIG. 3, and FIG. 1c, respectively, where:
the current collector was copper foil with a width of 81mm;
the first groove had a width of 25mm and a length of 10mm;
the second groove had a width of 81mm and a length of 30mm.

When the electrode sheet is a positive electrode sheet or a negative electrode sheet, the materials of the first active layer and the second active layer may refer to those of Example 1, except that the average particle size of the negative active material in the second active layer was 15µm, and the graphitization degree of the negative active material in the second active layer was 94%.

### Example 7

The front view, top view, and left view of the electrode sheet provided by this Example are as shown in FIG. 2a, FIG. 3, and FIG. 1c, respectively, where:
the current collector was copper foil with a width of 81mm;
the first groove had a width of 25mm and a length of 10mm;
the second groove had a width of 81mm and a length of 30mm.

When the electrode sheet is a positive electrode sheet or a negative electrode sheet, the materials of the first active layer and the second active layer may refer to those of Example 1, except that the average particle size of the negative active material in the second active layer was 15µm, and the graphitization degree of the negative active material in the second active layer was 90%.

### Example 8

The front view, top view, and left view of the electrode sheet provided by this Example are as shown in FIG. 2a, FIG. 3, and FIG. 1c, respectively, where:
the current collector was copper foil with a width of 81mm;
the first groove had a width of 25mm and a length of 10mm;
the second groove had a width of 81mm and a length of 30mm.

When the electrode sheet is a positive electrode sheet or a negative electrode sheet, the materials of the first active layer and the second active layer may refer to those of Example 1, except that the average particle size of the negative active material in the second active layer was 10µm, and the graphitization degree of the negative active material in the second active layer was 90%.

### Comparative Example 1

The electrode sheet provided by this Comparative Example included a current collector, a first active layer and a second active layer, and grooves were disposed in the middle of the side surfaces of the first active layer and of the second active layer, where,
the current collector is copper foil with a width of 81mm;
the grooves had a width of 25mm and a length of 10mm.

When the electrode sheet was a positive electrode sheet or a negative electrode sheet, the materials of the first active layer and the second active layer were the same as those of Example 1.

Lithium-ion batteries were prepared by combining the positive electrode sheet and the negative electrode sheet provided by the Examples 1-8 and the Comparative Example 1 with a separator and an electrolyte, and the cycle capacity retention rate of the lithium-ion batteries was tested.

The positive active material was purchased from Xiamen Tungsten New Energy Materials Co., Ltd. and the negative active material was purchased from Shanghai Shanshan Technology Co., Ltd.; the separator was purchased from Dongguan Zhuogao Electronic Technology Co., Ltd.; and the electrolyte was purchased from Shenzhen Xinzhoubang Technology Co., Ltd.

The method for testing the performance of the lithium-ion battery was as follows:

The lithium-ion batteries provided in Examples 1-8 and Comparative Example 1 were subjected to 2C/0.7C charge-discharge cycle test at 25°C, and the cycle retention rate (%) was calculated after 500 cycles. The test results were shown in Table 1.

**Table 1 Test Results of the Performance of Lithium-Ion Batteries Provided by Examples 1-8 and Comparative Example 1**

| | Cycle retention rate at 25°C |
|---|---|
| Example 1 | 84.8% |
| Example 2 | 85.5% |
| Example 3 | 86.1% |
| Example 4 | 87.2% |
| Example 5 | 88.1% |
| Example 6 | 83.9% |
| Example 7 | 85.8% |
| Example 8 | 86.7% |
| Comparative Example 1 | 82.5% |

It can be seen from Table 1 that the lithium-ion batteries provided in Examples 1-8 all had better cycle capacity retention rate; according to the data provided in Examples 1-5, as the length of the second groove increased, the cycle performance of the lithium-ion battery was improved accordingly; according to the data provided in Examples 6-8, the cycle retention rate of the lithium-ion battery increased as the graphitization degree and the average particle size of the active material in the second active layer decreased. To sum up, the lithium ion-battery provided by the present invention had better cycle performance under the condition of high-rate charging.

Finally, it should be noted that: the foregoing embodiments are merely intended for describing the technical solutions of the present invention rather than limiting the present invention; although the present invention is described in detail with reference to the foregoing embodiments, persons of ordinary skill in the art should understand that the technical solutions described in the foregoing embodiments may be modified or made equivalent substitutions to some or all technical features thereof; and these modifications and substitutions shall not cause the essence of the corresponding technical solutions to depart from the scope of the technical solutions of embodiments of the present invention.

## Claims

1. An electrode sheet, **characterized by** comprising a current collector, and a first active layer and a second active layer which are sequentially stacked on a surface of the current collector;
wherein, the first active layer is provided with a first groove, the second active layer is provided with a second groove, and a vertical projection of the second groove on the current collector covers a vertical projection of the first groove on the current collector; and
a tab is disposed at the first groove and is electrically connected with the current collector.

2. The electrode sheet according to claim 1, wherein a length of the second groove is greater than a length of the first groove.

3. The electrode sheet according to claim 1 or claim 2, wherein a width of the second groove is the same as a width of the current collector.

4. The electrode sheet according to any one of claims 1-3, wherein a difference between the length of the second groove and the length of the first groove is less than or equal to 500mm.

5. The electrode sheet according to any one of claims 1-4, wherein the electrode sheet is a negative electrode sheet, an average particle size of a negative active material in the second active layer is 10-18µm, and a graphitization degree of the negative active material in the second active layer is 86-94%.

6. The electrode sheet according to claim 5, wherein an average particle size and a graphitization degree of a negative active material in the first active layer are greater than the average particle size and the graphitization degree of the negative active material in the second active layer, respectively.

7. The electrode sheet according to any one of claims 1-6, wherein an area of the vertical projection of the first groove on the current collector is greater than an area of a tab connection region in the current collector.

8. The electrode sheet according to claim 7, wherein a width of the first groove is 1-2 times a width of the tab connection region.

9. The electrode sheet according to claim 7, wherein a length of the first groove is 1-2 times a length of the tab connection region.

10. A lithium-ion battery, **characterized by** comprising the electrode sheet according to any one of claims 1-9.
